# EUROPÄISCHE PATENTANMELDUNG

(11) **EP 4 227 128 A1**
(43) Veröffentlichungstag der Anmeldung: **16.08.2023**
(21) Anmeldenummer: 22156543.5
(22) Anmeldetag: 14.02.2022
(51) Int. Cl.: B60J 7/02, B60J 7/043

(54) **ANORDNUNGEN ZUM BEWEGEN EINES DECKELS UND FAHRZEUGDACH**

(71) Anmelder: Webasto SE, 82131 Stockdorf (DE)
(72) Erfinder: Gering, Sebastian, 82131 Stockdorf (DE); Popovici, Andrei, 82131 Stockdorf (DE)
(74) Vertreter: Epping - Hermann - Fischer

(57) **Zusammenfassung**

Es werden Anordnungen zum Bewegen eines Deckels (103) für ein Fahrzeugdach (101) angegeben, die beispielsweise aufweisen:
- eine entlang einer Längsrichtung (X) länglich ausgedehnte Führungsschiene (170),
- einen entlang der Längsrichtung (S) in der Führungsschiene (170) verschiebbaren Schlitten (120) mit einer Ausstellkulisse (121) für einen Ausstellhebel (110), wobei die Ausstellkulisse (121) eine Gleitbahn (122) aufweist, die entlang der Längsrichtung (X) einen ersten Abschnitt (123) und einen zweiten Abschnitt (124) aufweist, wobei die Ausstellkulisse (121) in dem ersten Abschnitt (123) entlang einer Querrichtung (Y), die quer zu der Längsrichtung (X) verläuft, eine erste Ausdehnung (125) aufweist, und die Ausstellkulisse (121) in dem zweiten Abschnitt (124) entlang der Querrichtung (Y) eine zweite Ausdehnung (126) ausweist, die größer ist als die erste Ausdehnung (125).

## Beschreibung

Es werden Anordnungen zum Bewegen eines Deckels für ein Fahrzeugdach angegeben. Zudem wird ein Fahrzeugdach angegeben, dass insbesondere mindestens eine derartige Anordnung aufweist.

Derartige Anordnungen für ein Fahrzeugdach dienen beispielsweise dazu, einen Deckel, ausgehend von einer Schließstellung zum Verschließen einer Dachöffnung, zum Öffnen durch eine Ausstellmechanik zunächst in seinem hinteren Bereich anzuheben und dann nach hinten in eine Offenstellung zu verschieben. Die DE 10023314 C1 beschreibt hierzu beispielsweise ein sogenanntes außen geführtes Schiebedach.

Es ist wünschenswert, Anordnungen zum Bewegen eines Deckels für ein Fahrzeugdach anzugeben, die einen verlässlichen Betrieb ermöglichen.

Gemäß einem ersten Aspekt weist eine Anordnung zum Bewegen eines Deckels für ein Fahrzeugdach gemäß Ausführungsformen eine entlang einer Längsrichtung länglich ausgedehnte Führungsschiene auf. Die Anordnung weist einen entlang der Längsrichtung in der Führungsschiene verschiebbaren Schlitten auf. Der Schlitten weist eine Ausstellkulisse für einen Ausstellhebel auf. Die Ausstellkulisse weist eine Gleitbahn auf. Die Gleitbahn weist entlang der Längsrichtung einen ersten Abschnitt und einen zweiten Abschnitt auf. Die Ausstellkulisse weist in dem ersten Abschnitt entlang einer Querrichtung eine erste Ausdehnung auf. Die Querrichtung verläuft quer zu der Längsrichtung, beispielsweise senkrecht zur Längsrichtung in der Horizontalen. Die Ausstellkulisse weist in dem zweiten Abschnitt entlang der Querrichtung eine zweite Ausdehnung auf. Die zweite Ausdehnung ist größer als die erste Ausdehnung.

Der Schlitten weist somit eine Ausstellkulisse auf, die entlang der Querrichtung unterschiedlich breit ausgebildet ist. Beispielsweise ist in dem breiteren zweiten Abschnitt im Betrieb eine höhere Abstützkraft für den Ausstellhebel möglich. Mittels des zweiten Abschnitts können im Betrieb höhere Kräfte von dem Schlitten aufgenommen und in die Führungsschiene abgeleitet werden. In dem schmaleren ersten Abschnitt müssen weniger Kräfte von dem Schlitten aufgenommen und in die Führungsschiene abgeleitet werden. Somit ist für die Ausstellkulisse und die Gleitbahn insbesondere im ersten Abschnitt ein geringerer Bauraumbedarf realisierbar, beispielsweise entlang der Querrichtung.

Gemäß zumindest einer weiteren Ausführungsform weist die Ausstellkulisse entlang der Längsrichtung einen Verlauf auf, sodass die Ausstellkulisse entlang der Längsrichtung zunächst ansteigt, dann geradlinig verläuft und dann abfällt. Der erste Abschnitt und der zweite Abschnitt grenzen in der geradlinigen Region des Verlaufs aneinander. Somit ist sowohl ein ausreichend langer, breiterer zweiter Abschnitt realisierbar als auch im ersten Abschnitt genug Bauraum einsparbar.

Gemäß zumindest einer weiteren Ausführungsform weist der Schlitten eine Steuerkulisse für eine Steuerstange auf. Die Steuerkulisse und die Ausstellkulisse sind entlang der Querrichtung auf gegenüberliegenden Seiten des Schlittens angeordnet. Insbesondere ist die Steuerkulisse in einem Bereich korrespondierend zum ersten Abschnitt ausgebildet. Die im ersten Abschnitt schmäler ausgebildete Ausstellkulisse ermöglicht, dass ohne großen zusätzlichen Bauraumbedarf an dem Schlitten gegenüberliegend zur Ausstellkulisse die Steuerkulisse anordenbar ist. Die Steuerkulisse und die Ausstellkulisse müssen insbesondere entlang einer vertikalen Hochrichtung nicht versetzt zueinander angeordnet werden. In Projektion überlappen die Steuerkulisse und die Ausstellkulisse zumindest teilweise.

Gemäß zumindest einer weiteren Ausführungsform sind die Steuerkulisse und der erste Abschnitt der Ausstellkulisse entlang der Querrichtung nebeneinander angeordnet. Zwischen der Steuerkulisse und der Ausstellkulisse ist entlang der Querrichtung eine Trennwand des Schlittens angeordnet. Die Trennwand ermöglicht eine stabile Ausführung des Schlittens auch in dem Bereich, in dem die Steuerkulisse und die Ausstellkulisse angeordnet sind.

Gemäß zumindest einer weiteren Ausführungsform weist der Schlitten einen Schlittengleiter auf. Der Schlittengleiter ist in der Führungsschiene geführt. Der Schlittengleiter und die Ausstellkulisse sind entlang der Längsrichtung versetzt zueinander angeordnet. Dies ermöglicht insbesondere bei geöffnetem Deckel ein Anordnen eines Hebelgleiters des Ausstellhebels entlang der Längsrichtung hinter dem Schlittengleiter und entlang der Hochrichtung auf gleicher Höhe wie der Schlittengleiter. Somit wird die Stabilität der Anordnung erhöht und insbesondere ist die Anordnung robust, sodass sie auch bei Unfällen stabil genug ist.

Gemäß einem zweiten Aspekt weist eine Anordnung zum Bewegen eines Deckels für ein Fahrzeugdach gemäß einer weiteren Ausführungsform eine entlang einer Längsrichtung länglich ausgedehnte Führungsschiene auf. Die Führungsschiene weist eine Führungsbahn auf. Die Führungsbahn ist ausgebildet, für einen Schlittengleiter eines Schlittens und für einen Steuergleiter einer Steuerstange. Die Führungsbahn weist entlang der Längsrichtung einen ersten Abschnitt und einen zweiten Abschnitt auf. Die Führungsschiene weist eine Riegelkulisse für die Steuerstange auf. Die Riegelkulisse ist an einem Übergang zwischen dem ersten Abschnitt und dem zweiten Abschnitt angeordnet. Die Riegelkulisse weist eine Ausnehmung auf. Die Ausnehmung ist so dimensioniert, dass der Schlittengleiter durch die Ausnehmung hindurchführbar ist. Die Ausnehmung ist so dimensioniert, dass der Steuergleiter mittels der Riegelkulisse in die Führungsbahn einbringbar und aus der Führungsbahn auslenkbar ist.

Die Führungsbahn und die Riegelkulisse mit der Ausnehmung sind so dimensioniert, dass der Steuergleiter nicht durch die Ausnehmung hindurch gelangen kann. Somit bildet die Riegelkulisse mit der Ausnehmung am Übergang eine Art Weiche. Die Ausnehmung ist groß genug, dass der Schlittengleiter durch die Ausnehmung hindurch gelangen kann und somit auch am Übergang an der Riegelkulisse die Führungsbahn der Führungsschiene nicht verlässt. Im Betrieb passiert der Schlittengleiter die Riegelkulisse durch die Ausnehmung hindurch, ohne von der Riegelkulisse abgelenkt zu werden.

Die Ausnehmung ist klein genug, sodass der Steuergleiter nicht durch die Ausnehmung hindurchführbar ist. Am Übergang wird der Steuergleiter über die Ausnehmung hinweggeführt und somit von der Riegelkulisse abgelenkt. Die Riegelkulisse weist einen Abschnitt neben der Ausnehmung auf, an dem der Steuergleiter neben der Ausnehmung entlang der Riegelkulisse gleiten kann. Die Riegelkulisse ermöglicht so, dass der Steuergleiter insbesondere entlang der vertikalen Hochrichtung aus der Führungsbahn herausführbar ist und entlang der Hochrichtung in die Führungsbahn einführbar ist. Insbesondere wenn der Steuergleiter in der Riegelkulisse oberhalb der Ausnehmung angeordnet ist, ist es möglich, dass der Schlittengleiter relativ zu dem Steuergleiter durch die Ausnehmung hindurch bewegbar ist.

Gemäß zumindest einer weiteren Ausführungsform erstreckt sich die Riegelkulisse geneigt zu der Längsrichtung von der Führungsbahn weg. Die Riegelkulisse ermöglicht so ein Verriegeln des Steuergleiters entlang der Längsrichtung, wenn der Steuergleiter in der Riegelkulisse angeordnet ist. Durch das Einbringen des Steuergleiters aus der Riegelkulisse in die Führungsbahn wird ein Verschieben des Steuergleiters entlang der Längsrichtung relativ zur Führungsschiene ermöglicht.

Gemäß zumindest einer weiteren Ausführungsform ist der erste Abschnitt vorgesehen, um den Schlittengleiter zu führen. Der zweite Abschnitt ist vorgesehen, um den Schlittengleiter und den Steuergleiter zu führen. Insbesondere ist der zweite Abschnitt ausgebildet, dass sowohl der Schlittengleiter als auch der Steuergleiter in Längsrichtung hintereinander gemeinsam in der Führungsbahn führbar sind. In dem ersten Abschnitt ist im Betrieb nur der Schlittengleiter geführt und insbesondere erreicht der Steuergleiter im bestimmungsgemäßen Gebrauch den ersten Abschnitt nicht.

Gemäß zumindest einer weiteren Ausführungsform weist die Führungsbahn in dem ersten Abschnitt entlang einer Querrichtung eine erste Ausdehnung auf. Die Führungsbahn weist in dem zweiten Abschnitt entlang der Querrichtung eine zweite Ausdehnung auf. Die zweite Ausdehnung ist größer als die erste Ausdehnung. Die erste Ausdehnung korrespondiert mit einer Querausdehnung der Ausnehmung. In dem zweiten Abschnitt weist die Führungsbahn die zweite Ausdehnung auf, die breit genug ist, dass sowohl der Schlittengleiter als auch der Steuergleiter führbar sind und verlässlich abgestützt werden können. Die zweite Ausdehnung muss lediglich den Schlittengleiter führen und abstützen, sodass hierfür die geringere Breite ausreichend ist. Die Führungsschiene insgesamt kann in dem ersten Abschnitt und in dem zweiten Abschnitt die gleiche Breite entlang der Querrichtung aufweisen. Jedoch ist die Führungsbahn, die in Kontakt mit Gleitern ist, in dem ersten Abschnitt schmäler, da insbesondere der Schlittengleiter schmäler ist als der Steuergleiter.

Gemäß einer weiteren Ausführungsform weist die Riegelkulisse zumindest abschnittsweise eine Querausdehnung auf, die mit der zweiten Ausdehnung korrespondiert. Die Riegelkulisse ist so breit oder im Wesentlichen so breit wie die Führungsbahn in dem zweiten Abschnitt. Somit ist es möglich, dass der Steuergleiter verlässlich in der Riegelkulisse führbar ist.

Gemäß einem vierten Aspekt weist eine Anordnung zum Bewegen eines Deckels für ein Fahrzeugdach gemäß einer Ausführungsform einen vorderen Ausstellhebel und einen hinteren Ausstellhebel auf. Die Anordnung weist einen Schlitten auf. Der hintere Ausstellhebel ist in Eingriff mit dem Schlitten. Die Anordnung weist eine Steuerstange auf. Die Steuerstange dient zum Koppeln des vorderen Ausstellhebels mit dem Schlitten. Die Steuerstange weist einen Vorsprung auf zum Eingriff in eine Steuerkulisse des Schlittens.

Die Kopplung des vorderen Ausstellhebels mit dem hinteren Ausstellhebel mittels der Steuerstange ermöglicht eine Verbesserung der Eigenfrequenz und somit eine Erhöhung der Robustheit. Somit können beispielsweise Deckel mit höheren Gewichten eingesetzt werden. Die Steuerkulisse zum Bewegen der Steuerstange ist in dem Schlitten angeordnet. Somit wird weniger Bauraum benötigt im Vergleich zu einer Anordnung, bei der die Steuerkulisse in einer Führungsschiene angeordnet ist.

Gemäß zumindest einer weiteren Ausführungsform weist die Steuerstange einen Steuergleiter auf. Der Steuergleiter ist ausgebildet zum Eingriff in eine Führungsschiene. Der Steuergleiter und der Vorsprung sind an einem ersten Ende der Steuerstange angeordnet. Der Steuergleiter und der Vorsprung sind voneinander abgewandt angeordnet. Somit ist bei geringem Bauraumbedarf die Führung der Steuerstange in der Steuerkulisse des Schlittens realisierbar und dabei mittels des Steuergleiters eine Führung und wahlweise Verriegelung der Steuerstange in der Führungsschiene ermöglicht.

Gemäß einem vierten Aspekt weist eine Anordnung zum Bewegen eines Deckels für ein Fahrzeugdach gemäß einer Ausführungsform einen Ausstellhebel auf. Der Ausstellhebel weist einen länglich ausgedehnten Hebelkörper auf. Der Ausstellhebel weist einen quer von dem Hebelkörper abstehenden Umgreifer auf. Der Umgreifer ist ausgebildet, einen Schlitten zu umgreifen. Der Umgreifer ist ausgebildet, sodass der Hebelkörper und der Umgreifer an gegenüberliegenden Seiten des Schlittens anordenbar sind. Somit ist es möglich, den Ausstellhebel entlang der Querrichtung an den beiden gegenüberliegenden Seiten des Schlittens abzustützen. Somit ist der Ausstellhebel verlässlich und stabil abstützbar.

Gemäß zumindest einer weiteren Ausführungsform weist der Ausstellhebel einen ersten und einen zweiten Hebelgleiter auf. Die beiden Hebelgleiter sind jeweils in einer Ausstellkulisse des Schlittens führbar. Der erste Hebelgleiter weist entlang einer Querrichtung eine geringere Ausdehnung auf als der zweite Hebelgleiter. Im Betrieb auftretende Kräfte werden vorrangig mittels des zweiten Hebelgleiters an den Schlitten abgegeben. Somit ist der erste Hebelgleiter, an dem geringere Kräfte auftreten, schmaler ausbildbar. Somit ist trotz geringerem Bauraumbedarf ein ausreichend stabiles und robustes Abstützen des Ausstellhebels ermöglicht.

Gemäß einer Ausführungsform weist ein Fahrzeugdach mindestens eine Anordnung gemäß dem ersten Aspekt, gemäß dem zweiten Aspekt, gemäß dem dritten Aspekt oder gemäß dem vierten Aspekt auf. Unterschiedlichste Ausführungsformen der einzelnen Anordnungen sind beliebig miteinander kombinierbar. Das Fahrzeugdach weist gemäß Ausführungsformen zwei Anordnungen gemäß der verschiedenen Aspekte auf, drei Anordnungen oder die vier Anordnungen. Dabei wirken die Anordnungen zusammen, um ein robustes Fahrzeugdach zu ermöglichen, bei dem die Ausstellmechanik einen geringen Bauraumbedarf hat.

Die Anordnungen sind gemäß Ausführungsformen Teil eines außen geführten Schiebedachs, bei dem der hintere Ausstellhebel an der hinteren Kante des Deckels zusammen mit dem Deckel relativ zu dem übrigen Fahrzeugdach in die Öffnungsrichtung verschoben wird.

Weitere Vorteile, Merkmale und Weiterbildungen ergeben sich aus den nachfolgenden, in Verbindung mit den Figuren erläuterten Beispielen. Gleiche, gleichartige und gleich wirkende Elemente können figurenübergreifend mit den gleichen Bezugszeichen versehen sein.

Es zeigen:
Figur 1 eine schematische Darstellung eines Fahrzeugs gemäß einem Ausführungsbeispiel,
Figuren 2 und 3 eine schematische Darstellung einer Ausstellmechanik gemäß einem Ausführungsbeispiel,
Figuren 4 bis 17 schematische Darstellungen von verschiedenen Detailansichten der Ausstellmechanik gemäß Ausführungsbeispielen.

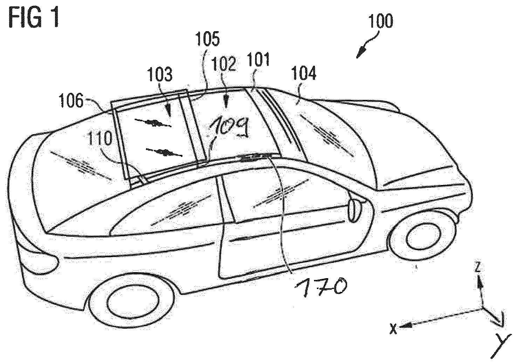

Figur 1 zeigt ein Fahrzeug 100 gemäß einem Ausführungsbeispiel. Das Fahrzeug 100 weist ein Fahrzeugdach 101 auf. An dem Fahrzeugdach 101 ist ein Deckel 103 angeordnet. Der Deckel 103 ist beispielsweise relativ zum übrigen Fahrzeugdach 101 beweglich. Somit kann eine Dachöffnung 102 wahlweise von dem Deckel 103 verschlossen werden oder teilweise freigegeben werden.

Das Fahrzeug weist eine Windschutzscheibe 104 auf. Der Deckel 103 weist eine Vorderkante 105 auf, die im betriebsgemäßen Zustand der Windschutzscheibe 104 zugewandt ist. Eine Hinterkante 106 des Deckels 103 ist entlang einer Längsrichtung X der Windschutzscheibe 104 abgewandt.

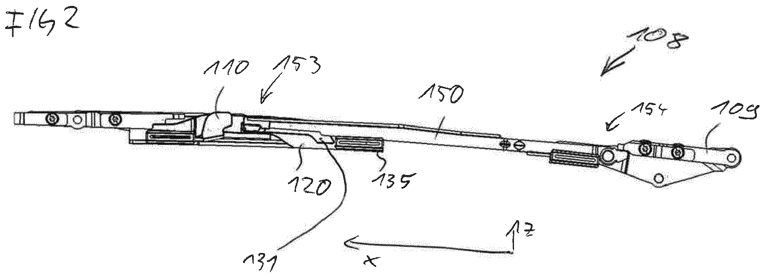

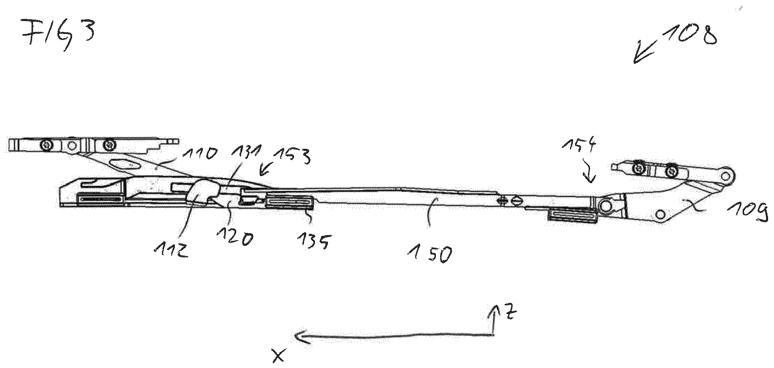

Die Bewegung des Deckels 103 wird mit einer Ausstellmechanik 108 (Figuren 2 und 3) realisiert. Die Ausstellmechanik 108 weist beispielsweise eine Führungsschiene 170 auf, die mit dem Fahrzeugdach 101 verbunden ist. In der Führungsschiene 170 ist beispielsweise ein Antriebskabel geführt. Das Antriebskabel ist beispielsweise in Kontakt mit einem elektrischen Antriebsmotor und weiteren Komponenten der Ausstellmechanik 108, um den Deckel 103 relativ zu dem übrigen Fahrzeugdach 101 zu bewegen.

Beispielsweise ist die Ausstellmechanik 108 nach Art eines sogenannten außen geführten Schiebedachs ausgeführt. Ein hinterer Ausstellhebel 110, der der Hinterkante 106 zugeordnet ist, wird im Betrieb zusammen mit dem Deckel 103 relativ zu dem übrigen Fahrzeugdach in die Öffnungsrichtung verschoben. Anders kann dies beispielsweise bei sogenannten Spoilerdächern sein, bei dem der Deckel zum Öffnen relativ zum hinteren Ausstellhebel verschoben wird.

Verwendete Ortsangaben oder Richtungsangaben, wie hinten oder vorne, oben oder unten, links oder rechts, vertikal oder horizontal, sind auf eine Fahrzeuglängsachse und eine übliche Fahrtrichtung eines betriebsbereiten Fahrzeugs 100 bezogen. Die Fahrzeuglängsachse kann auch als eine horizontale Achse oder X-Achse in zugehöriger Längsachse X bezeichnet werden. Die Fahrzeugquerachse kann auch als eine horizontale Achse oder Y-Achse in zugehöriger Querrichtung Y bezeichnet werden. Die Fahrzeughochachse kann auch als vertikale Achse oder Z-Achse in zugehöriger Hochrichtung Z bezeichnet werden. Die Hochrichtung, die Querrichtung und die Längsrichtung sind insbesondere jeweils senkrecht zueinander ausgerichtet.

Die Ausstellmechanik 108 ist insbesondere beiderseits der Dachöffnung 102 angeordnet und jeweils gleichartig ausgebildet. Im Folgenden wird daher lediglich eine Seite beschrieben und die Beschreibung, die Merkmale und Vorteile gelten korrespondierend auch für die gegenüberliegende Seite.

Figuren 2 und 3 zeigen die Ausstellmechanik 108 gemäß einem Ausführungsbeispiel. Figur 2 zeigt die Ausstellmechanik 108 in einer geschlossenen Position des Deckels 103. Figur 3 zeigt die Ausstellmechanik 108 in einer geöffneten Position des Deckels 103.

Die Ausstellmechanik 108 weist einen vorderen Ausstellhebel 109 auf. Der vordere Ausstellhebel 109 ist im Betrieb an der Vorderkante 105 des Deckels 103 angeordnet. Der hintere Ausstellhebel 110 ist im Betrieb an der Hinterkante 106 des Deckels 103 angeordnet. Mittels des hinteren Ausstellhebels 110 ist die Hinterkante 106 entlang der Hochrichtung Z anhebbar und absenkbar. Mittels des vorderen Ausstellhebels 109 ist die Vorderkante 105 des Deckels 103 anhebbar und absenkbar. Zudem ist der Deckel 103 mittels der beiden Ausstellhebel 109 und 110 entlang der Längsrichtung X verschiebbar.

Der vordere Ausstellhebel 109 ist mittels einer Steuerstange 150 mit dem hinteren Ausstellhebel 110 gekoppelt.

Die Steuerstange 150 erstreckt sich länglich ausgedehnt entlang der X-Richtung. An einem vorderen Ende 154 ist die Steuerstange mit dem vorderen Ausstellhebel 109 verbunden, sodass eine Rotation des vorderen Ausstellhebels 109 relativ zu der Steuerstange 150 möglich ist.

An einem hinteren Ende 153 ist die Steuerstange 150 mit einem Schlitten 120 verbunden. Der Schlitten 120 wiederum ist mit dem hinteren Ausstellhebel 110 verbunden. Somit sind der hintere Ausstellhebel 110 und die Steuerstange 150 mittelbar mittels des Schlittens 120 miteinander verbunden.

Der Schlitten 120 ist in der Führungsschiene 170 gehalten und geführt. Der Schlitten 120 ist relativ zu der Führungsschiene 170 entlang der Längsrichtung X verschiebbar, um die Bewegung des Deckels 103 anzutreiben. Der Schlitten 120 ist insbesondere an der Hinterkante 106 des Deckels 103 beziehungsweise in einem hinteren Bereich des Deckels 103 angeordnet.

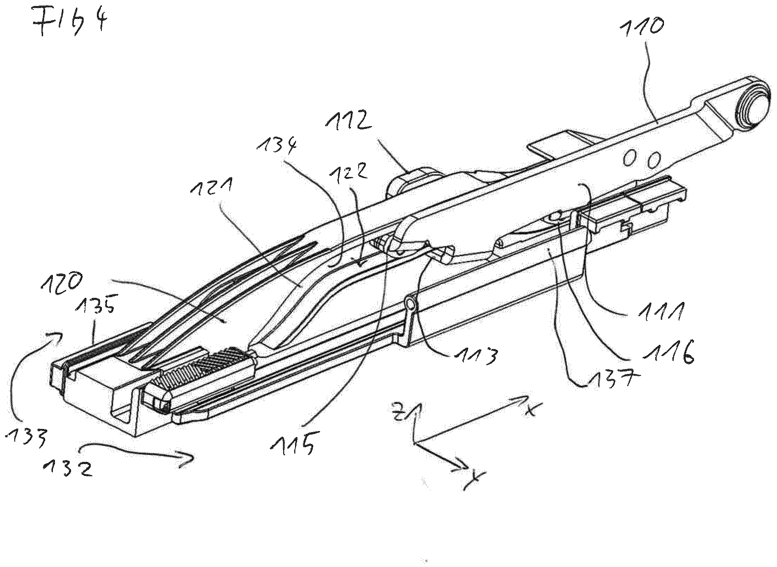

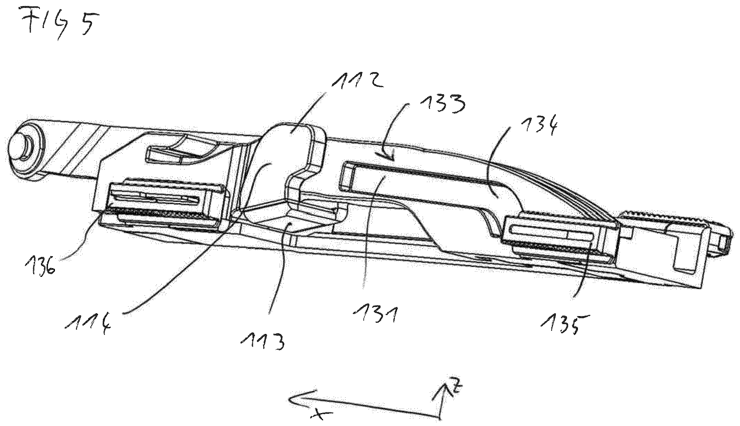

Figuren 4 und 5 zeigen den Schlitten 120 und den hinteren Ausstellhebel 110 gemäß einem Ausführungsbeispiel.

Der Schlitten 120 weist entlang der Längsrichtung X eine längere Ausdehnung auf als entlang der Querrichtung Y und der Hochrichtung Z. Der Schlitten 120 ist mittels Schlittengleiter 135, 136 in der Führungsschiene geführt. Beispielsweise ist der Schlittengleiter 135 an einem vorderen Ende des Schlittens 120 angeordnet und der Schlittengleiter 136 an einem hinteren Ende des Schlittens 120.

Der Schlitten 120 weist eine Steuerkulisse 131 auf. Die Steuerkulisse 131 dient zum Koppeln des Schlittens 120 mit der Steuerstange 150.

Der Schlitten 120 weist eine Ausstellkulisse 121 auf. Die Ausstellkulisse 121 dient zum Koppeln des Schlittens 120 mit dem hinteren Ausstellhebel 110.

Die Ausstellkulisse 121 ist auf einer ersten Seite 132 des Schlittens angeordnet. Die Steuerkulisse 131 ist auf einer gegenüberliegenden zweiten Seite 133 des Schlittens angeordnet. Die beiden Seiten 132, 133 sind entlang der Querrichtung X gegenüber angeordnet und erstrecken sich im Wesentlichen in XZ-Ebenen.

Der Schlitten 120 ist somit ausgebildet, an der einen Seite 132 mit dem Ausstellhebel 110 in Eingriff zu gelangen und an der gegenüberliegenden Seite 133 mit der Steuerstange 150 in Eingriff zu gelangen.

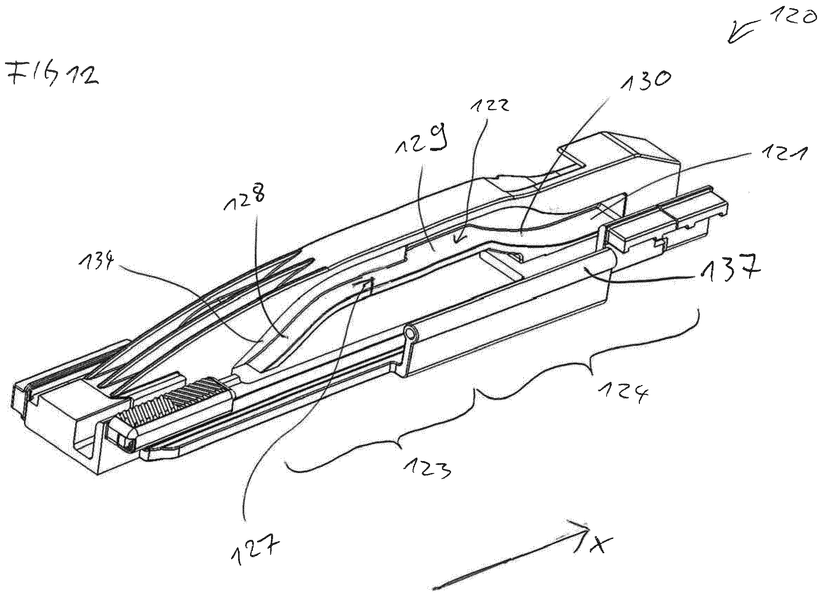

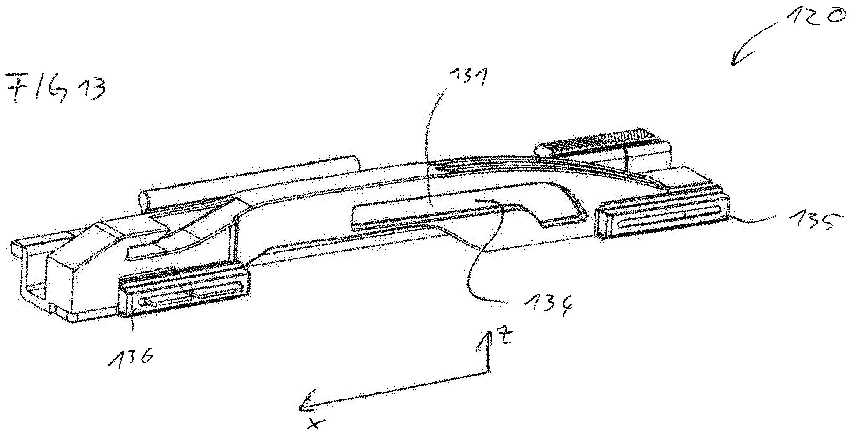

Mittels eines Verschiebens des Schlittens 120 relativ zu der Führungsschiene 170 ist somit eine Bewegung des hinteren Ausstellhebels 110 verursachbar. Mittels eines Verschiebens des Schlittens 120 ist somit eine Bewegung der Steuerstange 150 verursachbar. Wie sich auch aus Figuren 12 und 13 ergibt, weist der Schlitten 120 eine Kabelanbindung 137 auf. Mittels der Kabelanbindung 137 ist der Schlitten 120 mit einem Antriebskabel verbunden, sodass eine Antriebskraft eines Elektromotors an den Schlitten 120 übertragen werden kann.

Die Ausstellkulisse 121 verläuft entlang der X-Richtung auf unterschiedlichen Niveaus entlang der Hochrichtung Z. Die Ausstellkulisse 121 weist entlang der Längsrichtung X von vorne nach hinten eine erste Region 128 auf, die schräg ansteigend verläuft. Die Ausstellkulisse 121 weist eine zweite Region 129 auf, die an die erste Region 128 anschließt. Die zweite Region 129 verläuft im Wesentlichen geradlinig, ohne entlang der Hochrichtung Z anzusteigen oder abzufallen. Die Ausstellkulisse 121 weist eine dritte Region 130 auf, die sich entlang der Längsrichtung X an die zweite Region 129 anschließt. Die dritte Region 130 ist abfallend ausgebildet, sodass die dritte Region 130 entlang der Hochrichtung Z nach unten geneigt ausgebildet ist. Die Ausstellkulisse 121 weist somit einen Verlauf 127 auf, der entlang der Längsrichtung X zunächst geneigt ist, dann geradlinig ohne Neigung verläuft und anschließend wieder geneigt ist.

Die Ausstellkulisse 121 weist eine Gleitbahn 122 auf. Die Gleitbahn ist insbesondere die entlang der Hochrichtung X untere Begrenzungswand der Ausstellkulisse 121. Auf der Gleitbahn 122 können sich Hebelgleiter 115, 116 des hinteren Ausstellhebels 110 abstützen. Kräfte des Deckels 103 werden somit mittels des hinteren Ausstellhebels 110 auf den Schlitten 120 und somit auf die Führungsschiene 170 übertragen.

Die Ausstellkulisse 121 und die Gleitbahn 122 weisen einen ersten Abschnitt 123 und einen zweiten Abschnitt 124 auf. Der erste Abschnitt 123 ist insbesondere entlang der Längsrichtung X in einem vorderen Bereich der Ausstellkulisse 121 ausgebildet. Der zweite Abschnitt 124 ist insbesondere entlang der Längsrichtung X in einem hinteren Bereich der Ausstellkulisse 121 ausgebildet. Entlang der Längsrichtung X endet der erste Abschnitt 123 in der geradlinigen zweiten Region 129. Entlang der Längsrichtung X beginnt der zweite Abschnitt 124 in der geradlinigen zweiten Region 129. Der erste Abschnitt 123 und der zweite Abschnitt 124 grenzen insbesondere unmittelbar aneinander an in der zweiten Region 129.

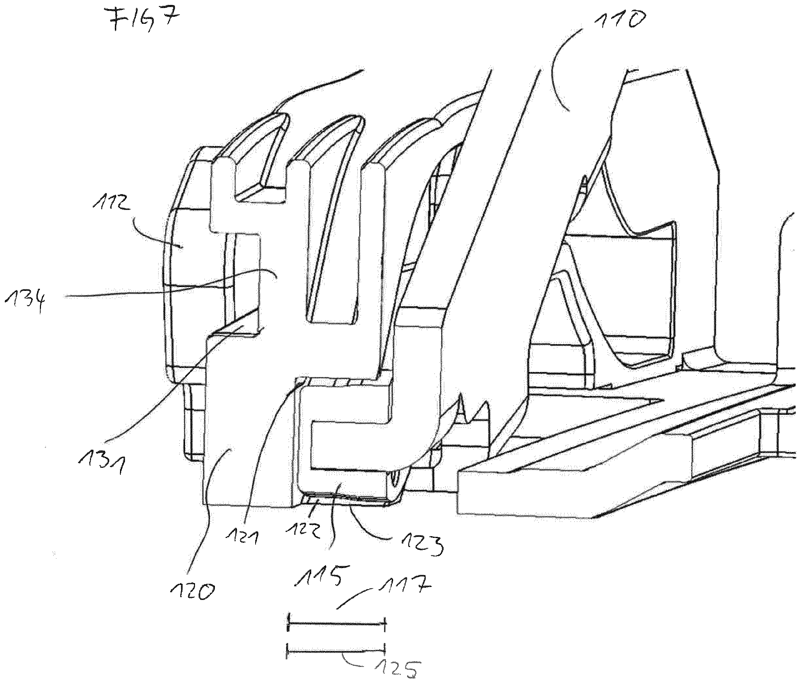

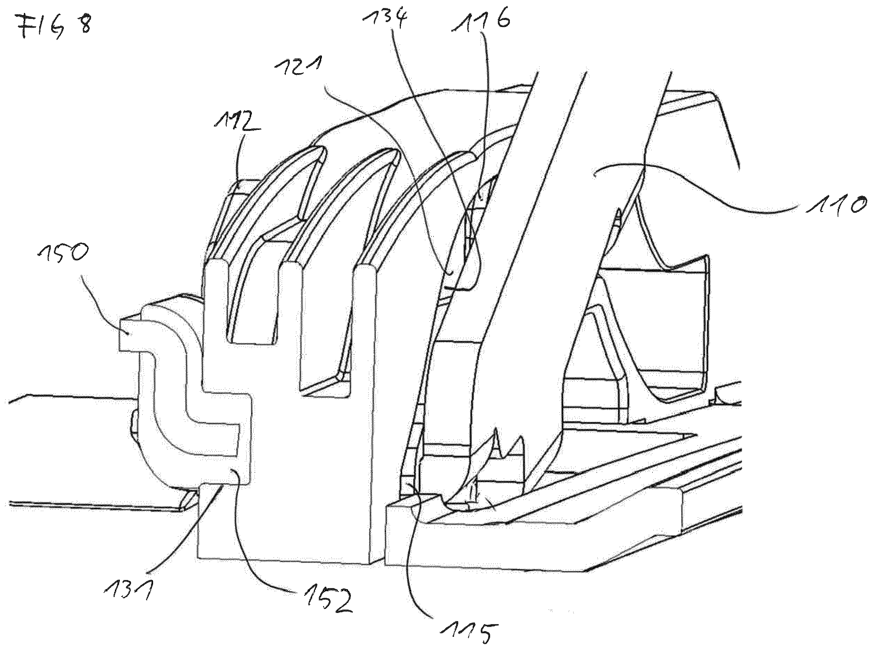

Wie sich insbesondere aus den Figuren 7 bis 9 ergibt, weist der erste Abschnitt 123 eine erste Ausdehnung 125 auf. Der zweite Abschnitt 124 weist eine zweite Ausdehnung 126 auf. Die erste Ausdehnung 125 ist kleiner als die zweite Ausdehnung 126. Die Ausdehnungen 125, 126 sind die Querausdehnungen der Ausstellkulisse 121 beziehungsweise der Gleitbahn 122. In dem ersten Abschnitt 123 ist die Gleitbahn 122 also entlang der Querrichtung Y schmäler ausgebildet als in dem zweiten Abschnitt 124. In dem zweiten Abschnitt 124 ist die Gleitbahn 122 entlang der Querrichtung Y breiter als in dem ersten Abschnitt 123.

Der erste Abschnitt 123 der Ausstellkulisse 121 ist unmittelbar neben der Steuerkulisse 131 ausgebildet. In Projektion auf eine XZ-Ebene überschneiden sich die Ausstellkulisse 121 und die Steuerkulisse 131 zumindest teilweise. Zwischen der Steuerkulisse 131 und der Ausstellkulisse 121 ist eine Trennwand 134 des Schlittens 120 ausgebildet. Aufgrund der geringeren Ausdehnung 125 in dem ersten Abschnitt 123 ist ohne zusätzlichen Bauraumbedarf entlang der Querrichtung Y der Schlitten stabil ausbildbar mit der Ausstellkulisse 121 auf der Seite 132 und der Steuerkulisse 131 auf der gegenüberliegenden Seite 133.

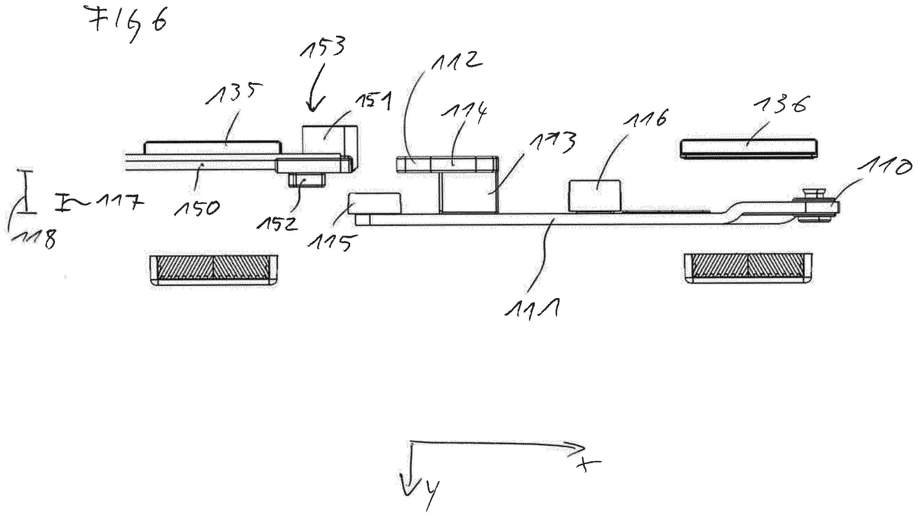

Der hintere Ausstellhebel 110 weist die beiden Hebelgleiter 115, 116 auf, wie sich beispielsweise auch aus Figur 6 ergibt. Die beiden Hebelgleiter 115, 116 springen jeweils entlang der Y-Richtung über einen Hebelkörper 111 des hinteren Ausstellhebels 110 vor. Die beiden Hebelgleiter 115, 116 sind im Betrieb in der Ausstellkulisse 121 angeordnet und werden in dieser geführt. Bei einer Relativbewegung des Schlittens 120 zum Ausstellhebel 110 wird der Ausstellhebel 110 somit verschwenkt.

Der erste Hebelgleiter 115 ist an einem vorderen Ende des Hebelkörpers 111 angeordnet. Der zweite Hebelgleiter 116 ist entlang der Längsrichtung X mittig am Hebelkörper 111 angeordnet.

Der erste Hebelgleiter 115 ist im Betrieb in dem ersten Abschnitt 123 der Ausstellkulisse 121 angeordnet. Der zweite Hebelgleiter 116 ist zum Betrieb in dem zweiten Abschnitt 124 der Ausstellkulisse 121 angeordnet.

Der erste Hebelgleiter 115 weist eine erste Ausdehnung 117 entlang der Querrichtung Y auf. Der zweite Hebelgleiter 116 weist eine zweite Ausdehnung 118 entlang der Querrichtung Y auf. Die erste Ausdehnung 117 ist kleiner als die zweite Ausdehnung 118. Der zweite Hebelgleiter 116 ist breiter ausgebildet als der erste Hebelgleiter 115. Die im Betrieb auftretenden Kräfte werden vorrangig über den zweiten Hebelgleiter 116 auf den Schlitten 120 übertragen. An dem ersten Hebelgleiter 115 treten geringere Kräfte auf. Daher kann der erste Hebelgleiter 115 schmäler ausgebildet werden als der zweite Hebelgleiter 116.

Die erste Ausdehnung 117 des ersten Hebelgleiters 115 korrespondiert insbesondere mit der ersten Ausdehnung 125 der Ausstellkulisse 121, wie sich insbesondere auch aus Figur 7 ergibt. Der schmälere erste Hebelgleiter 115 ist in dem ersten Abschnitt 123 der Ausstellkulisse 121 mit der schmäleren Gleitbahn 122 geführt.

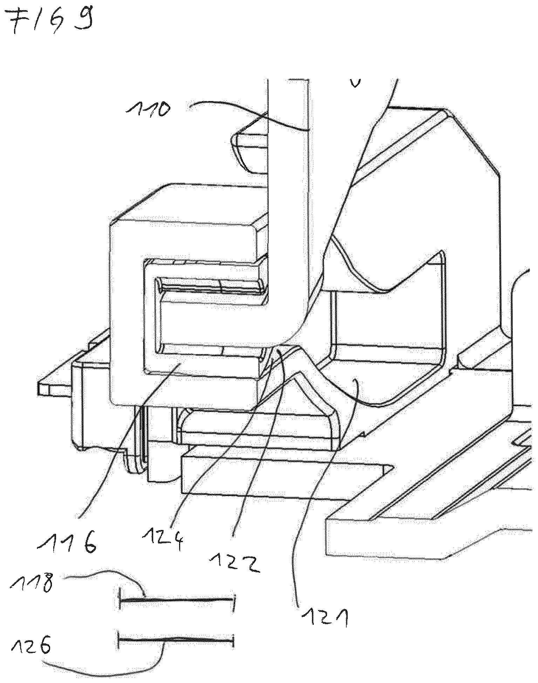

Die zweite Ausdehnung 118 des zweiten Hebelgleiters 116 korrespondiert insbesondere mit der zweiten Ausdehnung 126 der Gleitbahn 122, wie sich insbesondere auch aus Figur 9 ergibt. Der breitere zweite Hebelgleiter 116 ist in dem breiteren zweiten Abschnitt 124 der Ausstellkulisse 121 geführt.

Der hintere Ausstellhebel 110 weist einen Umgreifer 112 auf. Der Umgreifer weist ein Horizontalteil 113 auf, der sich entlang der Querrichtung Y von dem Hebelkörper 111 weg erstreckt. Der Umgreifer 112 weist ein Vertikalteil 114 auf, der sich in einer XZ-Ebene erstreckt. An dem Vertikalteil 114 ist eine Umspritzung 119 aus einem Kunststoff angebracht.

Der Hebelkörper 111 und der Vertikalteil 114 verlaufen im Wesentlichen parallel zueinander entlang der Längsrichtung X beabstandet zueinander entlang der Querrichtung Y. Zwischen dem Hebelkörper 111 und dem Vertikalteil 114 ist der Horizontalteil 113 angeordnet.

Mittels des Umgreifers 112 umgreift der hintere Ausstellhebel 110 den Schlitten 120. Beispielsweise ist der Hebelkörper 111 auf der ersten Seite 132 des Schlittens 120 angeordnet. Der Horizontalteil 130 erstreckt sich durch den Schlitten 120 hindurch bis zu der zweiten Seite 133 des Schlittens 120. Der Vertikalteil 114 ist auf der zweiten Seite 133 des Schlittens 120 angeordnet. Insbesondere ist der Vertikalteil 114 in Kontakt mit dem Schlitten 120 an der zweiten Seite 133. Die Umspritzung 119 ist aus einem Material gebildet, das möglichst reibungsarm an dem Schlitten 120 gleitet. Im Betrieb ist beispielsweise die Umspritzung 119 in Kontakt mit dem der zweiten Seite 133 des Schlittens 120. Somit ist der Ausstellhebel 110 sowohl an der ersten Seite 132 des Schlittens als auch an der zweiten Seite 133 abgestützt. Der Schlitten 120 und der Vertikalteil 114 sind ausgebildet, dass eine Relativbewegung möglichst reibungsarm gleitend ermöglicht ist.

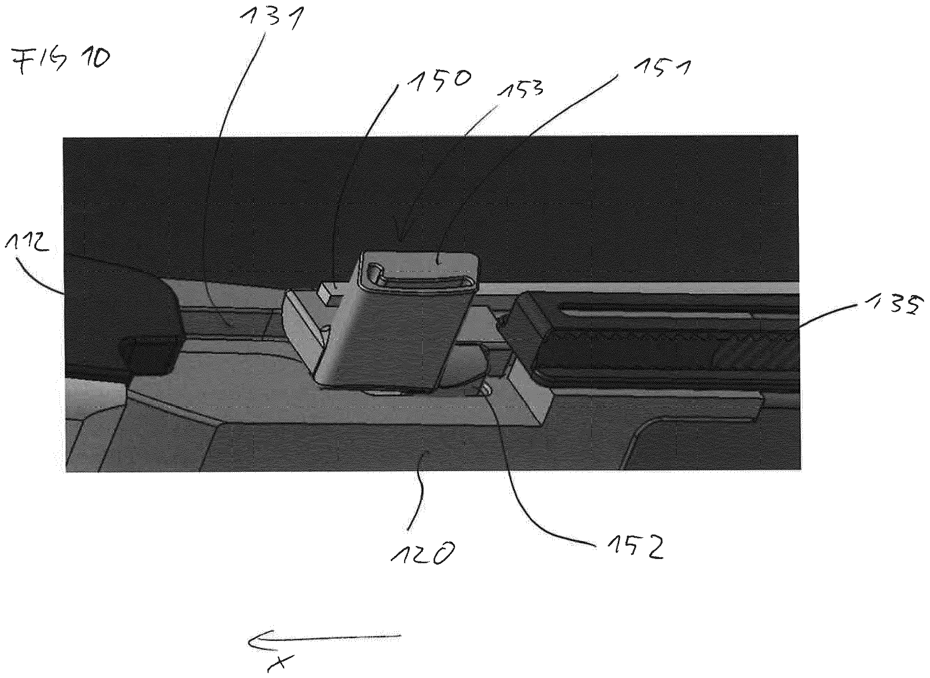

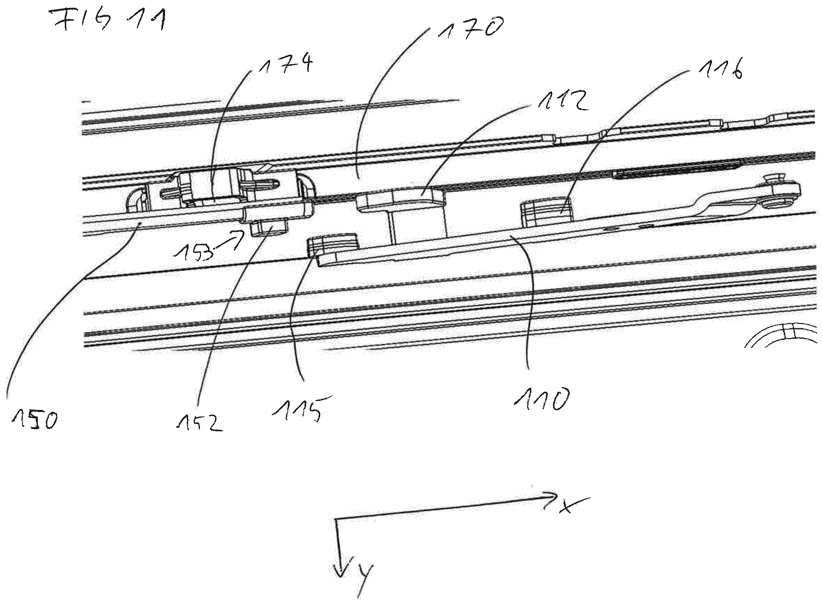

Wie sich beispielsweise aus Figuren 10 und 11 ergibt, weist die Steuerstange 150 an dem ersten Ende 153 einen Steuergleiter 151 und einen Vorsprung 152 auf. Der Steuergleiter 151 springt entlang der Querrichtung Y vor. Der Vorsprung 122 springt entlang der Y-Richtung vor. Der Steuergleiter 151 und der Vorsprung 152 springen jedoch in entgegengesetzte Richtungen entlang der Querrichtung Y vor.

Der Vorsprung 152 ist ausgebildet zum Eingriff in die Steuerkulisse 131 des Schlittens 120. Mittels des Eingriffs des Vorsprungs 152 in die Steuerkulisse 131 ist das erste Ende 153 der Steuerstange 150 entlang der Hochrichtung Z bewegbar. Somit ist die Steuerstange 150 zwischen einem ersten Zustand und einem zweiten Zustand bewegbar. In dem ersten Zustand ist die Steuerstange 150 beispielsweise relativ zu der Führungsschiene 170 entlang der Längsrichtung X verriegelt. In dem zweiten Zustand ist die Steuerstange 150 beispielsweise relativ zu der Führungsschiene 170 entlang der Längsrichtung X verschiebbar, insbesondere gemeinsam mit dem Schlitten 120. Die Verschiebung wird insbesondere durch die Kopplung des Vorsprungs 152 in der Steuerkulisse 131 verursacht. Somit ist eine Antriebsbewegung des Schlittens 120 mittels der Steuerstange 150 auf dem vorderen Ausstellhebel 109 übertragbar.

Die Steuerkulisse 131 weist einen im Wesentlichen geradlinigen Verlauf auf. Wenn der Vorsprung 152 in dem geradlinigen Bereich angeordnet ist, ist der Schlitten 120 relativ zu der Steuerstange 150 entlang der Längsrichtung X verschiebbar.

Die Steuerkulisse 131 weist eine im Wesentlichen entlang der Hochrichtung Z verlaufenden Bereich auf. Wenn der Vorsprung 122 in diesem Bereich angeordnet ist, wird eine Bewegung des Schlittens 120 relativ zu der Führungsschiene 170 entlang der Längsrichtung X auf die Steuerstange 150 übertragen.

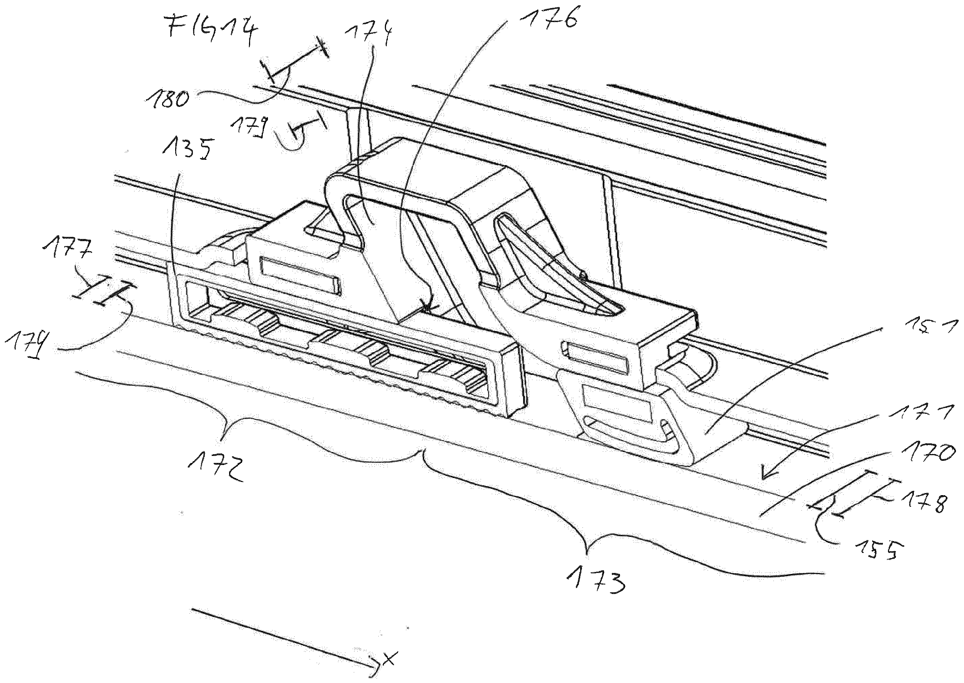

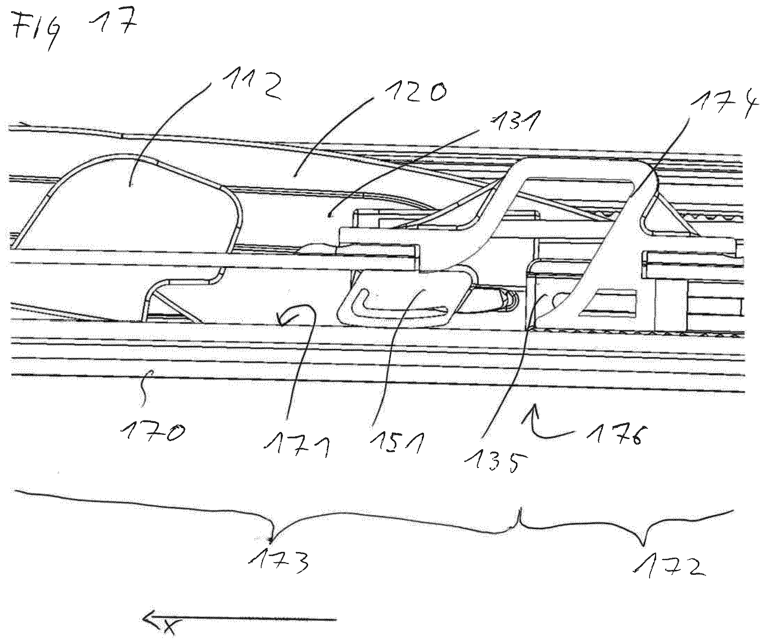

Der Steuergleiter 151 wirkt mit einer Riegelkulisse 174 der Führungsschiene 170 zusammen, wie sich beispielsweise aus den Figuren 14 bis 17 ergibt.

Die Führungsschiene 170 weist eine Führungsbahn 171 für die Schlittengleiter 135, 136 auf. Die Führungsbahn 171 verläuft im Wesentlichen entlang der Längsrichtung X.

Die Riegelkulisse 174 verläuft geneigt zu der Führungsbahn 171 im Wesentlichen entlang der Hochrichtung Z. Die Riegelkulisse 174 verläuft beginnend von der Führungsbahn 171 nach oben geneigt.

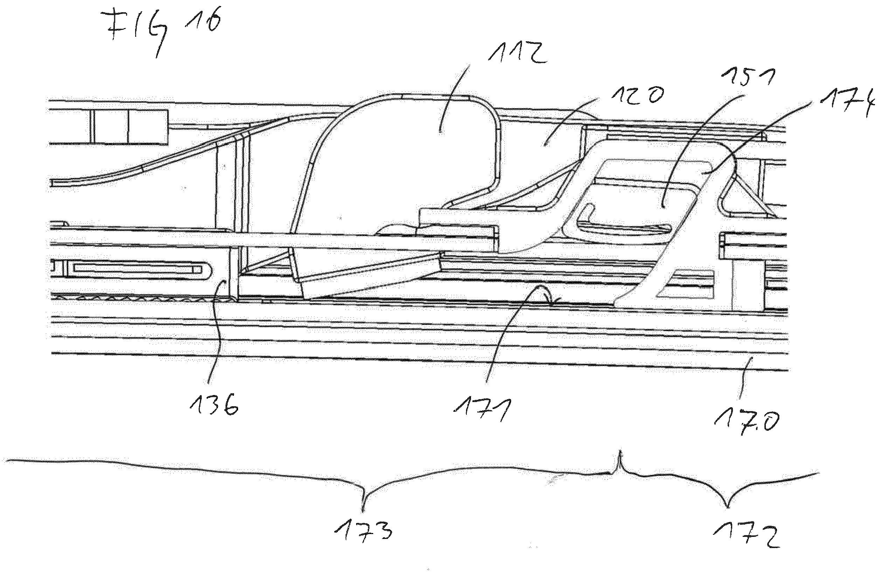

Wenn der Steuergleiter 151 in der Riegelkulisse 174 angeordnet ist, insbesondere an einem oberen Bereich der Riegelkulisse 174, ist die Steuerstange 150 entlang der Längsrichtung X relativ zu der Führungsschiene 170 verriegelt (Figur 16).

Mittels des Eingriffs des Vorsprungs 152 in die Steuerkulisse 131 ist bei einem Verschieben des Schlittens 120 ein Bewegen des Steuergleiters 151 entlang der Riegelkulisse 174 antreibbar. Somit ist beispielsweise der Steuergleiter 141 in die Riegelkulisse 174 einbringbar oder aus dieser auskoppelbar.

Wenn der Steuergleiter 151 aus der Riegelkulisse 174 herausgeführt wurde und auf der Führungsbahn 171 angeordnet ist, ist ein Verschieben der Steuerstange 140 entlang der Längsrichtung X relativ zur Führungsschiene 170 möglich. In diesem Zustand sind der Schlitten 120 und die Steuerstange 150 so miteinander verriegelt, dass eine Relativbewegung entlang der Längsrichtung X zwischen dem Schlitten 120 und der Steuerstange 150 blockiert ist.

Die Führungsbahn 171 weist einen ersten Abschnitt 172 und einen zweiten Abschnitt 173 auf. Der erste Abschnitt 172 ist entlang der Längsrichtung X in einem vorderen Bereich angeordnet. Der zweite Abschnitt 173 ist entlang der Längsrichtung X in einem hinteren Bereich angeordnet. In dem ersten Abschnitt 172 wird nur der Schlittengleiter 135 geführt. Der Steuergleiter 151 wird nicht in dem ersten Abschnitt 172 geführt. In dem zweiten Abschnitt 173 werden sowohl der Steuergleiter 151 als auch der Schlittengleiter 135 geführt. In dem zweiten Abschnitt 173 verlaufen der Steuergleiter 151 und der Schlittengleiter 135 gemeinsam in der Führungsbahn 171.

In dem zweiten Abschnitt 173 weist die Führungsbahn 171 eine zweite Ausdehnung 178 auf, die insbesondere mit einer Querausdehnung 155 des Steuergleiters 151 korrespondiert.

In dem ersten Abschnitt 172 ist die Führungsbahn 171 gemäß Ausführungsbeispielen mit einer ersten Ausdehnung 177 ausgebildet, die beispielsweise geringer als die zweite Ausdehnung 178 ist. Es ist auch möglich, dass die Führungsschiene 170 in dem ersten Abschnitt 172 genauso breit ist wie in dem zweiten Abschnitt 173, wobei jedoch in dem ersten Abschnitt 172 nur ein Teil der Führungsschiene 170 als Führungsbahn 171 genutzt wird und dieser Teil die erste Ausdehnung 177 aufweist. Die Führungsbahn 171 ist in dem ersten Abschnitt 172 mindestens so breit, dass der Schlittengleiter 135 abgestützt werden kann. Die Führungsbahn 171 ist in dem zweiten Abschnitt 173 mindestens so breit, dass der Steuergleiter 151 zusätzlich zum Schlittengleiter 135 abgestützt werden kann. Insbesondere ist der erste Abschnitt 172 in dem Bereich der Riegelkulisse 174 ausgebildet, in dem die Querausdehnung 177 durch die Ausnehmung 176 und die Riegelkulisse 174 begrenzt ist.

Die Riegelkulisse 174 weist an einem der Führungsbahn 171 zugewandten Ende eine Ausnehmung 176 auf. Die Ausnehmung ist entlang der Querrichtung Y dem Schlitten 120 zugewandt. Die Ausnehmung 176 dient dazu, dass der Steuergleiter 151 zwischen dem ersten Abschnitt 172 und dem zweiten Abschnitt 173 hin und her bewegt werden kann. Die Riegelkulisse 174 versperrt somit nicht die Bewegung des Schlittengleiters 135. Eine Querausdehnung 179 der Ausnehmung 176 entspricht somit einer Querausdehnung 155 des Schlittengleiters 135 beziehungsweise ist nur leicht größer. Beispielsweise korrespondiert die Querausdehnung 179 der Ausnehmung 176 mit der ersten Ausdehnung 177 der Führungsbahn 171 im ersten Abschnitt 172.

Die Querausdehnung 179 der Ausnehmung 176 ist insbesondere geringer als die Querausdehnung 155 des Steuergleiters 151. Entlang der Querrichtung Y ist die Ausnehmung 176 von einem Teil der Riegelkulisse 174 begrenzt. Dieser Teil entspricht beispielsweise im Wesentlichen dem Unterschied der Querausdehnung 155 des Steuergleiters 151 und der Querausdehnung des Schlittengleiters 135. Somit ist der Steuergleiter 151 aufgrund der Riegelkulisse 174 nicht zwischen den beiden Abschnitten 172 und 173 der Führungsbahn 171 hin und her bewegbar.

Die Riegelkulisse 174 weist beispielsweise eine Querausdehnung 180 auf. Die Querausdehnung 180 der Riegelkulisse 174 ist beispielsweise so groß oder im Wesentlich so groß wie die Querausdehnung 155 des Steuergleiters und/oder die zweite Ausdehnung 178 der Führungsbahn 171. Die Querausdehnung 179 der Ausnehmung 176 ist kleiner als die Querausdehnung 180 der Riegelkulisse 174.

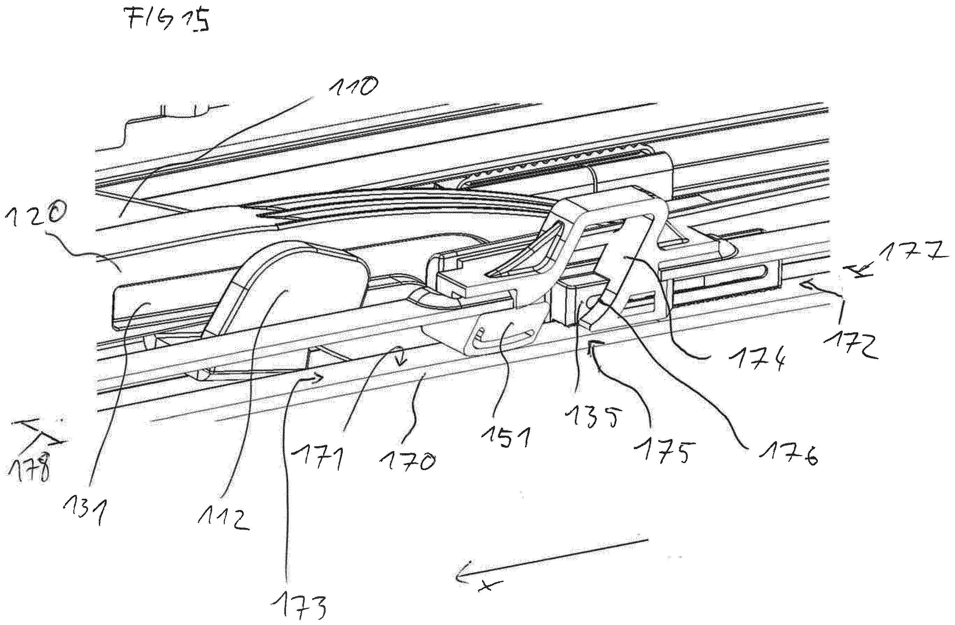

Wird der Steuergleiter 151 zum Schließen der Dachöffnung 102 mittels des Deckels 103 entlang der Längsrichtung X nach vorne bewegt, ausgehend von der Position gemäß Figur 15, stößt der Steuergleicher 151 an einem Übergang 175 auf den Bereich der Riegelkulisse 174 neben der Ausnehmung 176. Die Riegelkulisse 174 verursacht bei einer weiteren Verschiebung des Steuergleiters 151, dass der Steuergleiter aus der Führungsbahn 171 wegbewegt wird und entlang der Hochrichtung Z in die Riegelkulisse 174 geschoben wird, wie beispielsweise in Figur 16 dargestellt ist. Somit ist die Steuerstange 150 und damit der vordere Ausstellhebel 109 entlang der Längsrichtung X relativ zu der Führungsschiene 170 verriegelt. Der Schlitten 120 ist relativ zu der Steuerstange 150 weiter entlang der Längsrichtung X relativ zu der Führungsschiene 170 verschiebbar, um die hinteren Ausstellhebel 110 zu verschwenken.

Zum Öffnen der Dachöffnung 107 verläuft der Bewegungsablauf in umgekehrter Reihenfolge.

Die Ausstellmechanik 108 ermöglicht einen geringen Bauraumbedarf sowohl in Z-Richtung als auch in Y-Richtung. Aufgrund der Kopplung der beiden Ausstellhebel 109, 110 können höhere Eigenfrequenzen erreicht werden. Im Betrieb werden vergleichsweise geringe Geräuschemissionen ermöglicht. Die relative Anordnung der einzelnen Gleiter zueinander, insbesondere des Schlittengleiters 135 und des Steuergleiters 151, ermöglicht eine hohe Crashperformance. Insbesondere wird eine robuste und verlässlich betreibbare Ausstellmechanik 108 ermöglicht, die beispielsweise auch vergleichsweise hohe Deckelmassen von bis zu 12 kg oder mehr bewegen und auch bei hohen Fahrzeuggeschwindigkeiten über schlechte Wege tragen und halten kann. Insbesondere kann der Deckel 103 mit einem höheren Gewicht als das herkömmliche Deckelgewicht von beispielsweise etwa 9 kg verlässlich und stabil verwendet werden. Auch im Betrieb auftretende dynamische Belastungen können trotz des vergleichsweise großen Deckelgewichts aufgenommen und in die Führungsschiene abgeleitet werden.

Insbesondere ist es möglich, dass in Ausstellmechaniken 108 gemäß Ausführungsbeispielen nicht alle der hier beschriebenen Bauteile in den hier beschriebenen Ausgestaltungen eingesetzt werden. Insbesondere ist es beispielsweise möglich, den Schlitten 120 mit den unterschiedlichen Ausdehnungen 125, 126 auch ohne die Steuerstange 150 oder mit einer andersartig ausgebildeten Steuerstange zu verwenden. Beispielsweise ist es möglich, die Führungsschiene 170 mit der Riegelkulisse 174 und der Ausnehmung 176 mit einem andersartig ausgebildeten Antriebsschlitten, der beispielsweise nicht alle Merkmale des hier beschriebenen Schlittens 120 aufweist, zu verwenden.

Beispielsweise ist es auch möglich, den hinteren Ausstellhebel 110 mit den unterschiedlich breiten Hebelgleitern 115, 116 ohne den Umgreifer 112 vorzusehen. Beispielsweise ist es auch möglich, den hinteren Ausstellhebel 110 mit dem Umgreifer 112 vorzusehen und mit gleichbreiten Hebelgleitern 115, 116.

In den verschiedenen Ausführungsbeispielen ermöglicht die Ausstellmechanik 108 beispielsweise die Kopplung des vorderen Ausstellhebels 109 mit dem hinteren Ausstellhebel 110 mittels der Steuerstange 150. Dies ermöglicht eine verbesserte Eigenfrequenz und damit auch eine erhöhte Robustheit. Somit werden höhere Deckelgewichte möglich.

Das Vorsehen der Steuerkulisse 131 für die Steuerstange 150 gemäß Ausführungsbeispielen in dem Schlitten 140 wird insgesamt ein geringerer Bauraumbedarf beansprucht und insbesondere wird weniger Bauraumbedarf für die Steuerstange 150 benötigt.

Die Steuerkulisse 131 ist insbesondere entlang der Hochrichtung Z nicht unterhalb der Ausstellkulisse 121 angeordnet, sondern gemäß Ausführungsbeispiel auf demselben Niveau entlang der Hochrichtung Z. Dies wird insbesondere durch die Verkleinerung des vorderen Hebelgleiters 115 ermöglicht. Dies ist auch deswegen möglich, da der vordere Hebelgleiter 115 im Betrieb weniger stark belastet wird. Der hintere Hebelgleiter 116 weist einen entlang der Querrichtung Y sehr großen Gleiter auf, da dieser im Betrieb die meisten Lasten abtragen muss. Hierfür ist die Ausstellkulisse 121 entlang der Querrichtung Y in die zwei verschiedenen Ausdehnungen 125, 126 aufgeteilt.

Durch die Anordnung der Steuerkulisse 131 auf demselben Niveau entlang der Hochrichtung Z wie die Ausstellkulisse 121 ist ein Untergriff des hinteren Ausstellhebels 110 mittels des Umgreifers 112 möglich. Die vorderen Schlittengleiter 135 sind entlang der Längsrichtung X vor der Ausstellkulisse 121 und der Steuerkulisse 131 angeordnet. Dadurch kann sich die Steuerstange 150 in geöffneter Dachposition hinter den vorderen Schlittengleiter 135 verhaken. Dies verbessert die Crashperformance.

Insgesamt ist ein sehr flach ausgestaltetes Mechaniksystem mit hoher Robustheit auch für hohe Deckelgewichte realisierbar. Beispielsweise ist es möglich, Leuchten in den Deckel zu integrieren oder eine schaltbare Verglasung in den Deckel zu integrieren. Trotz dieses zusätzlichen Gewichts ermöglicht die Ausstellmechanik 108 einen verlässlichen Betrieb.

### Bezugszeichen

- 100: Fahrzeug
- 101: Fahrzeugdach
- 102: Dachöffnung
- 103: Deckel
- 104: Windschutzscheibe
- 105: Vorderkante
- 106: Hinterkante
- 107 108: Ausstellmechanik
- 109: vorderer Ausstellhebel
- 110: hinterer Ausstellhebel
- 111: Hebelkörper
- 112: Umgreifer
- 113: Horizontalteil
- 114: Vertikalteil
- 115, 116: Hebelgleiter
- 117: erste Ausdehnung
- 118: zweite Ausdehnung
- 119: Umspritzung

- 120: Schlitten
- 121: Ausstellkulisse
- 122: Gleitbahn
- 123: erster Abschnitt
- 124: zweiter Abschnitt
- 125: erste Ausdehnung
- 126: zweite Ausdehnung
- 127: Verlauf
- 128, 129, 130: Region
- 131: Steuerkulisse
- 132, 133: Seiten des Schlittens
- 134: Trennwand
- 135, 136: Schlittengleiter
- 137: Kabelanbindung

- 150: Steuerstange
- 151: Steuergleiter
- 152: Vorsprung
- 153: erstes Ende
- 154: zweites Ende
- 155: Querausdehnung

- 170: Führungsschiene
- 171: Führungsbahn
- 172: erster Abschnitt
- 173: zweiter Abschnitt
- 174: Riegelkulisse
- 175: Übergang
- 176: Ausnehmung
- 177: erste Ausdehnung
- 178: zweite Ausdehnung
- 179: Querausdehnung der Ausnehmung
- 180: Querausdehnung der Riegelkulisse

- X: Längsrichtung
- Y: Querrichtung
- Z: Hochrichtung

## Patentansprüche

1. Anordnung zum Bewegen eines Deckels (103) für ein Fahrzeugdach (101), aufweisend:
- eine entlang einer Längsrichtung (X) länglich ausgedehnte Führungsschiene (170),
- einen entlang der Längsrichtung (S) in der Führungsschiene (170) verschiebbaren Schlitten (120) mit einer Ausstellkulisse (121) für einen Ausstellhebel (110), wobei die Ausstellkulisse (121) eine Gleitbahn (122) aufweist, die entlang der Längsrichtung (X) einen ersten Abschnitt (123) und einen zweiten Abschnitt (124) aufweist, wobei die Ausstellkulisse (121) in dem ersten Abschnitt (123) entlang einer Querrichtung (Y), die quer zu der Längsrichtung (X) verläuft, eine erste Ausdehnung (125) aufweist, und die Ausstellkulisse (121) in dem zweiten Abschnitt (124) entlang der Querrichtung (Y) eine zweite Ausdehnung (126) ausweist, die größer ist als die erste Ausdehnung (125).

2. Anordnung nach Anspruch 1, bei der die Ausstellkulisse (121) entlang der Längsrichtung (X) einen Verlauf (127) aufweist, der ansteigt, dann geradlinig verläuft und dann abfällt, wobei der erste Abschnitt (123) und der zweite Abschnitt (124) in der geradlinigen Region (129) des Verlaufs aneinander angrenzen.

3. Anordnung nach Anspruch 1 oder 2, bei der der Schlitten (120) eine Steuerkulisse (131) für eine Steuerstange (150) aufweist, wobei die Steuerkulisse (131) und die Ausstellkulisse (121) entlang der Querrichtung (Y) auf gegenüberliegenden Seiten (132, 133) des Schlittens (120) angeordnet sind.

4. Anordnung nach Anspruch 3, wobei die Steuerkulisse (131) und der erste Abschnitt (123) der Ausstellkulisse (121) entlang der Querrichtung (Y) nebeneinander angeordnet sind, und zwischen der Steuerkulisse (131) und der Ausstellkulisse (121) eine Trennwand (134) des Schlittens (120) angeordnet ist.

5. Anordnung nach einem der Ansprüche 1 bis 4, bei der der Schlitten (120) einen Schlittengleiter (135) aufweist, der in der Führungsschiene (170) geführt ist, wobei der Schlittengleiter (135) und die Ausstellkulisse (121) entlang der Längsrichtung (X) versetzt zueinander angeordnet sind.

6. Anordnung zum Bewegen eines Deckels (103) für ein Fahrzeugdach (101), aufweisend:
- eine entlang einer Längsrichtung (X) länglich ausgedehnte Führungsschiene (170) mit einer Führungsbahn (171) für einen Schlittengleiter (135) eines Schlittens (120) und für einen Steuergleiter (151) einer Steuerstange (150), wobei die Führungsbahn (171) entlang der Längsrichtung (X) einen ersten Abschnitt (172) und einen zweiten Abschnitt (173) aufweist,
- wobei die Führungsschiene eine Riegelkulisse (174) für die Steuerstange (150) aufweist, wobei die Riegelkulisse (174) an einem Übergang (175) zwischen dem ersten Abschnitt (172) und dem zweiten Abschnitt (173) angeordnet ist und eine Ausnehmung (176) aufweist, die so dimensioniert ist, dass der Schlittengleiter (135) durch die Ausnehmung (176) hindurch führbar ist und der Steuergleiter (151) mittels der Riegelkulisse (174) in die Führungsbahn (171) einbringbar und aus der Führungsbahn (171) auslenkbar ist.

7. Anordnung nach Anspruch 6, bei der sich die Riegelkulisse (174) geneigt zu der Längsrichtung (X) von der Führungsbahn (171) wegerstreckt.

8. Anordnung nach Anspruch 6 oder 7, bei der der erste Abschnitt (172) vorgesehen ist, um den Schlittengleiter (135) zu führen, und der zweite Abschnitt (173) vorgesehen ist, um den Schlittengleiter (135) und den Steuergleiter (151) zu führen.

9. Anordnung nach einem der Ansprüche 6 bis 8, wobei die Führungsbahn (171) in dem ersten Abschnitt (172) entlang einer Querrichtung (Y), die quer zu der Längsrichtung (X) verläuft, eine erste Ausdehnung (177) aufweist, und die Führungsbahn (171) in dem zweiten Abschnitt (173) entlang der Querrichtung (Y) eine zweite Ausdehnung (178) ausweist, die größer ist als die erste Ausdehnung (177) und die erste Ausdehnung (177) mit einer Querausdehnung (179) der Ausnehmung (176) korrespondiert.

10. Anordnung nach Anspruch 9, bei der die Riegelkulisse (174) zumindest abschnittsweise eine Querausdehnung (180) aufweist, die mit der zweiten Ausdehnung (178) korrespondiert.

11. Anordnung zum Bewegen eines Deckels (103) für ein Fahrzeugdach (101), aufweisend:
- einen vorderen Ausstellhebel (109),
- einen hinteren Ausstellhebel (110),
- einen Schlitten (120), wobei der hintere Ausstellhebel (110) in Eingriff mit dem Schlitten (120) ist,
- eine Steuerstange (150) zum Koppeln des vorderen Ausstellhebels (109) mit dem Schlitten (110), wobei die Steuerstange (150) einen Vorsprung (152) aufweist zum Eingriff in eine Steuerkulisse (131) des Schlittens (120).

12. Anordnung nach Anspruch 11, bei der die Steuerstange (150) einen Steuergleiter (151) aufweist zum Eingriff in eine Führungsschiene (170), wobei der Steuergleiter (151) und der Vorsprung (152) an einem ersten Ende (153) der Steuerstange (150) angeordnet sind und voneinander abgewandt angeordnet sind.

13. Anordnung zum Bewegen eines Deckels (103) für ein Fahrzeugdach (101), aufweisend einen Ausstellhebel (110) mit:
- einem länglich ausgedehnten Hebelkörper (111),
- einem quer von dem Hebelkörper (111) abstehenden Umgreifer (112), der ausgebildet ist, einen Schlitten (120) zu umgreifen, sodass der Hebelkörper (111) und der Umgreifer (112) an gegenüberliegenden Seiten (132, 133) des Schlittens (120) anordenbar sind.

14. Anordnung nach Anspruch 13, bei der der Ausstellhebel (110) einen ersten und einen zweiten Hebelgleiter (115, 116) aufweist, die jeweils in einer Ausstellkulisse (121) des Schlittens (120) führbar sind, wobei der erste Hebelgleiter (115) entlang einer Querrichtung (Y) eine geringere Ausdehnung (117) aufweist als der zweite Hebelgleiter (116).

15. Fahrzeugdach für ein Fahrzeug, mindestens eines aufweisend aus:
- einer Anordnung gemäß einem der Ansprüche 1 bis 5,
- einer Anordnung gemäß einem der Ansprüche 6 bis 10,
- einer Anordnung gemäß einem der Ansprüche 11 oder 12, und
- einer Anordnung gemäß einem der Ansprüche 13 oder 14.
